Europäisches Patentamt

European Patent Office

Office européen des brevets

(11) Veröffentlichungsnummer: **0 281 642 B1**

# EUROPÄISCHE PATENTSCHRIFT

(45) Veröffentlichungstag der Patentschrift: **12.08.92**

(51) Int. Cl.⁵: **H04N 9/64**

(21) Anmeldenummer: **87103281.9**

(22) Anmeldetag: **07.03.87**

(54) **Daten-Compander für digitale Videosignale.**

(43) Veröffentlichungstag der Anmeldung:
**14.09.88 Patentblatt 88/37**

(45) Bekanntmachung des Hinweises auf die
Patenterteilung:
**12.08.92 Patentblatt 92/33**

(84) Benannte Vertragsstaaten:
**DE FR NL**

(56) Entgegenhaltungen:
**EP-A- 0 177 320**
**EP-A- 0 196 826**

**FERNSEH & KINO TECHNIK, Band 40, Nr. 4,
April 1986, Seiten 141-146, Heidelberg, DE; T.
NILLESEN: "Digitaler TV-Farbdecoder mit
Zeilenfrequenzverkopplung"**

(73) Patentinhaber: **Deutsche ITT Industries GmbH
Hans-Bunte-Strasse 19 Postfach 840
W-7800 Freiburg i.Br.(DE)**

(72) Erfinder: **Gillies, David
Waldstrasse 29
W-7803 Gundelfingen(DE)**

**Beschreibung**

Die Erfindung, wie sie in den Ansprüchen gekennzeichnet ist, betrifft einen Daten-Compander für digitale Videosignale, deren Abtastfrequenz mit der Farbträgerfrequenz verkoppelt ist.

Derartige Daten-Compander werden beispielsweise benötigt, wenn die Videosignale temporär, z.B. für eine Halb- oder Vollbilddauer, zwischengespeichert werden sollen, um etwa flimmerfreie Bildwiedergabe zu realisieren. Da heutige Fernsehsignale neben längeren Texten (Videotext) immer auch senkrechte Linien enthalten, ist es unbedingt erforderlich, dafür zu sorgen daß, z.B. im gesendeten Signal, übereinanderliegende Bildpunkte auch senkrecht wiedergegeben werden, d.h. daß Teile von senkrechten Linien, z.B. von Buchstaben, nicht nach links oder rechts versetzt wiedergegeben werden und somit die gesamte senkrechte Linie sozusagen schlangenförmig dargestellt wird.

Bei der Verarbeitung digitaler Videosignale, deren Abtastfrequenz mit der Farbträgerfrequenz verkoppelt ist, ergeben sich die bekannten Vorteile, daß z.B. die Farbdemodulation sehr einfach möglich ist, in dem mit der vierfachen Farbträgerfrequenz die analogen Videosignale abgetastet und analog-digital-gewandelt werden. Mit diesen farbträgerverkoppelten digitalen Videosignalen läßt sich jedoch die erwünschte senkrechte Wiedergabe senkrechter Linien nicht immer erzielen.

Eine andere Möglichkeit, digitale Videosignale zu erzeugen ist, diese gestützt auf ein Abtastraster zu digitalisieren, das mit der Zeilenfrequenz verkoppelt ist. Bei zeilenverkoppelten digitalen Videosignalen ist immer gewährleistet, daß senkrechte Linien auch senkrecht wiedergegeben werden (Siehe Artikel "Digitaler TV-Farbdecoder mit Zeilenfrequenzverkopplung" von Ton Nillesen, in Fernseh & Kino Tecknik 40 (1986) Apr. No 4).

Zwar ist beim Empfang gesendeter Videosignale durch die Farbträgersynchronisation im allgemeinen gewährleistet, daß auch bei farbträgerverkoppeltem Abtastraster senkrechte Linien auch senkrecht wiedergegeben werden, heutige Fernsehgeräte müssen jedoch auch Nicht-Standard-Videosignale oder verrauschte Videosignale verarbeiten können.

Durch die Erfindung wird erreicht, daß senkrecht übereinanderliegende Bildpunkte auch in dieser Form abgespeichert werden, so daß beim Auslesen aus erwähntem Zwischenspeicher die gewünschte senkrechte Zuordnung der Bildpunkte, die bei der Erzeugung eines flimmerfreien Bildes unbedingt erforderlich ist, gewährleistet ist. Es werden also im Zwischenspeicher auch bei verrauschten oder Nicht-Standard-Videosignalen nur senkrecht zueinandergehörende Bildpunkte abgelegt, so daß unabhängig von der Art und der Qualität der analogen Videosignale die Ausgangssignale des Zwischenspeichers auf ein zeilenverkoppeltes Abtastraster bezogene Digitalsignale sind. Diese werden anschließend in auf das farbträgerverkoppelte Abtastraster bezogene Digitalsignale überführt.

Die Erfindung wird nun anhand der Figuren der Zeichnung näher erläutert.

Fig. 1 zeigt schematisch, wie die Fig. 2 bis 6 zusammengehören,

Fig. 2 zeigt ein Ausführungsbeispiel des bei der Erfindung verwendeten Koppeländerungsfilters,

Fig. 3 zeigt ein Ausführungsbeispiels des bei der Erfindung verwendeten (a/b)-Dezimationsfilters,

Fig. 4 zeigt ein Ausführungsbeispiel des verwendeten ersten Peaking-Filters,

Fig. 5 zeigt ein Ausführungsbeispiel des verwendeten (b/a)-Interpolationsfilters, und

Fig. 6 zeigt ein Ausführungsbeispiel des verwendeten zweiten Peaking-Filters.

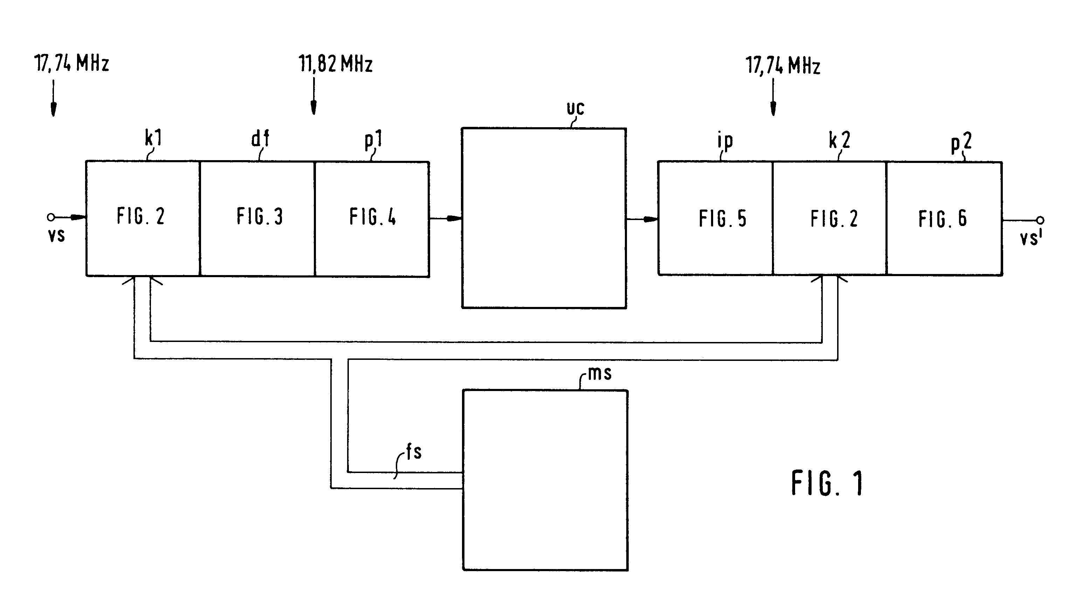

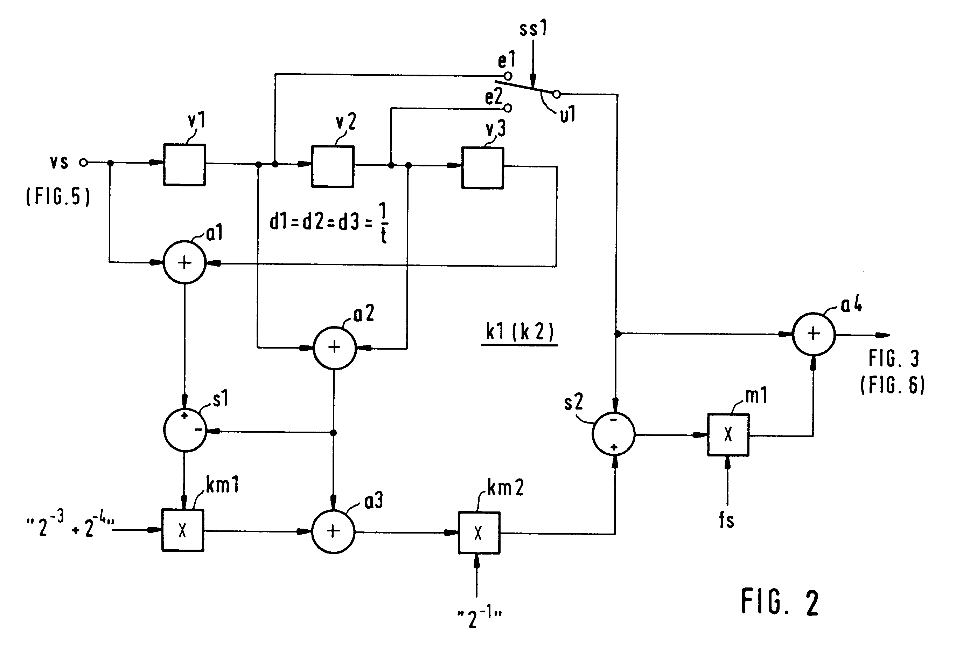

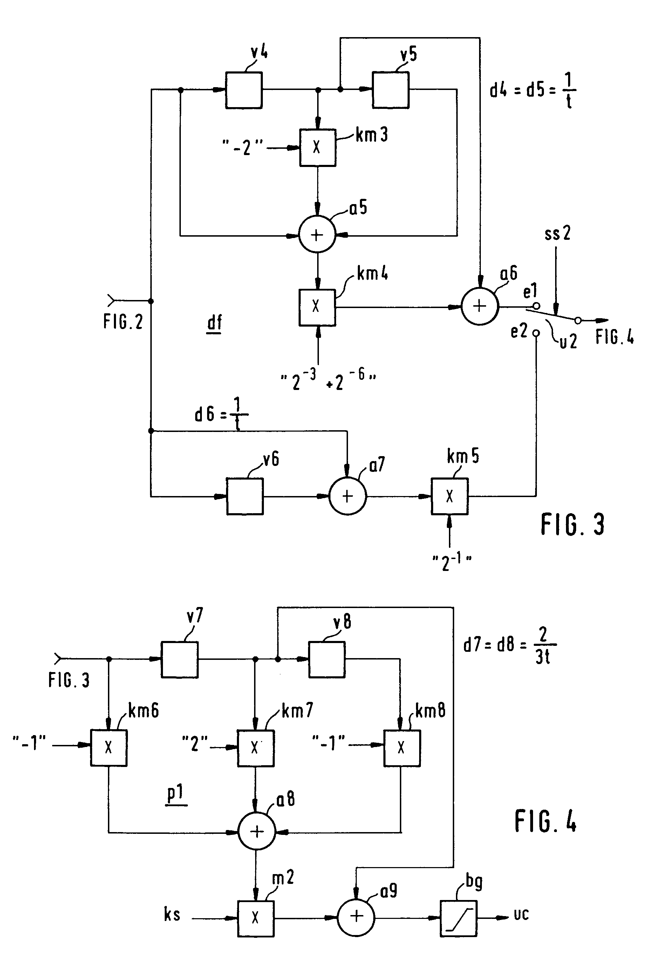

Die schematische Übersichtsdarstellung der Fig. 1 zeigt, wie die Teilschaltungen der Fig. 2 bis 6 und weitere Schaltungen zusammenwirken. In Signalflußrichtung sind die Teilschaltungen in Serie geschaltet, nämlich, vom Eingang für das digitale Videosignal vs aus gesehen, das Koppeländerungsfilter k1, das (a/b)-Dezimationsfilter df, wobei a, b ganze Zahlen sind und a kleiner als b ist, das erste Peaking-Filter p1, die Verwendungsschaltung uc für die zeilenverkoppelten Signale, das (b/a)-Interpolationsfilter ip, das Koppelumkehrfilter k2 und das zweite Peaking-Filter p2, an dessen Ausgang die kompandierten Videosignale vs' auftreten.

Die Verwendungsschaltung uc kann den eingangs erwähnten Zwischenspeicher sowie zu dessen rationellem Betrieb erforderliche Zusatzschaltungen enthalten, wie etwa redundanzvermindernde Datenreduktionsschaltungen auf der Eingangsseite und zugehörige redundanzwiederherstellende Datenerweiterungsschaltungen auf der Ausgangsseite des Zwischenspeichers. Die üblichen Differenz-Pulscode-Modulatoren und -demodulatoren können hierfür herangezogen werden.

In Fig. 1 ist ferner die Abweichungsmeßschaltung ms schematisch gezeigt, die das Fehlersignal fs erzeugt. Diese Meßschaltung kann beispielsweise die in einem Fernsehgerät immer zur Erzeugung der Horizontal- und Vertikalablenksignale erforderliche Synchronisationsschaltung selbst, ein Teil davon oder eine funktionell darauf bezogene Schaltung sein; jedenfalls erzeugt sie das n-stellige Fehlersignal fs, das bevorzugt fünfstellig ist und im natürlich-binären Code vorliegen soll. Es ist proportional zu derjenigen zeitlichen, in Teilen der Periodendauer der Abtastfrequenz t gemessenen Abweichung, die das Videosignal einer Zeile gegenüber dem Abtastraster aufweist. Das Fehlersignal fs kann beispielsweise aus dem in der erwähnten Synchronisierschaltung vorhandenen, am Ausgang einer Phasenvergleichsstufe liegenden Filter stammen, die die Frequenz des Horizontalablenkoszillators mit der der empfangenen Horizontalsynchronimpulse vergleicht. Das Fehlersignal fs ist in noch näher zu erläuternder Weise dem Koppeländerungsfilter k1 und dem Koppelumkehrfilter k2 zugeführt.

In Fig. 2 ist ein bevorzugtes Ausführungsbeispiel für das Koppeländerungsfilter k1 und das Koppelumkehrfilter k2 gezeigt. Es ist, wie auch die Fig. 3 bis 6, in üblicher Digitalfilter-Schaltungsart gezeichnet, in der die wesentlichen Bestandteile, nämlich Verzögerer, Addierer, Subtrahierer und Multiplizierer durch entsprechende Symbole dargestellt sind, die mittels einfacher Verbindungslinien untereinander verbunden sind, obwohl es dem Digitalfilterfachmann klar ist, daß diese Verbindungslinien eigentlich Busse sind, also Leitungsbündel, auf denen parallele Digital-Daten, vorzugsweise getaktet, übertragen werden.

Zur Vereinfachung der Beschreibung der Fig. 2 bis 6 ist darauf verzichtet, die mehrfach vorkommenden gleichartigen Bestandteile wie in den Patentansprüchen durch entsprechende Ordnungzahlen voneinander zu unterscheiden, vielmehr wird es für ausreichend gehalten, in der Figurenbeschreibung die einzelnen Teilschaltungen durch ihre Bezugszeichen voneinander zu unterscheiden, wobei die Ziffer des Bezugszeichens mit der jeweiligen Ordnungszahl in den Ansprüchen übereinstimmt.

Das Koppeländerungs- bzw. das Koppelumkehr-filter k1, k2 besteht im Ausführungsbeispiel nach Fig. 2 jeweils aus den Verzögerern v1, v2, v3, den Addierern a1, a2, a3, a4, den Subtrahierern s1, s2, den Konstantenmultiplizierern km1, km2, dem Multiplizierer m1 und dem Umschalter u1. Die drei Verzögerer v1....v3 liegen signalflußmäßig in Serie, wobei dem Eingang des Verzögerers v1 die digitalen Videosignale vs, die, wie mehrfach erwähnt, auf ein farbträgerverkoppeltes Abtastsystem bezogen sind, zugeführt sind. Die Verzögerungszeit d1, d2, d3 dieser Verzögerer ist gleich der Periodendauer der Abtastfrequenz t, so daß am Ausgang jedes Verzögerers zu einem bestimmten Zeitpunkt drei aufeinanderfolgende Datenwörter des Videosignals vs gleichzeitig zur Verfügung stehen und abgegriffen werden können.

Der erste Eingang des Addierers a1 liegt am Eingang des Verzögerers v1 und ist somit mit dem Videosignal vs gespeist, während dessen zweiter Eingang am Ausgang des Verzögerers v3 liegt.

Jeweils einer der beiden Eingänge des Addierers a2 liegt am Eingang bzw. am Ausgang des Verzögerers v2, an welchen beiden Schaltungspunkten auch der erste und der zweite Eingang e1, e2 des Umschalters u1 angeschlossen ist.

Der Minuend-Eingang des Subtrahierers s1 ist mit dem Ausgang des Addierers a1 und dessen Subtrahend-Eingang mit dem Ausgang des Addierers a2 verbunden; am Ausgang des Subtrahierers s1 entsteht somit die Differenz der Ausgangssignale der Addierer a1, a2. Der Konstantenmultiplizierer km1 multipliziert dieses Ausgangssignal mit einem Digitalwort, das der Dezimalzahl $2^{-3} + 2^{-4}$ entspricht. Liegt dieses Digitalwort im natürlichen Binärcode vor, so lassen sich diese Multiplikation wie auch die weiteren noch zu erläuternden Multiplikationen durch Ausnutzung der Stellenverschiebungsregel schaltungstechnisch recht einfach realisieren, was dem Fachmann geläufig ist.

Der Ausgang des Addierers a2 und der des Konstantenmultiplizierers k1 liegt an jeweils einem Eingang des Addierers a3, und dessen Ausgang ist über den Konstantenmultiplizierer km2, der mit einem Digitalwort multipliziert, das der Dezimalzahl $2^{-1}$ entspricht, mit dem Minuend-Eingang des Subtrahierers s2 verbunden. Dessen Subtrahend-Eingang liegt am Ausgang des Umschalters u1, der auch am einen der beiden Eingänge des Addierers a4 angeschlossen ist. Dessen anderer Eingang wird vom Ausgang des Multiplizierers m1 gespeist, dessen einer Eingang am Ausgang des Subtrahierers s2 liegt und dessen anderem Eingang das Fehlersignal fs wie folgt zugeführt ist: Durch Stellenverschiebung um n-1 Stellen in Richtung fallender Wertigkeit der Stellen wird ein Binärbruch mit n-1 Stellen hinter dem Komma gebildet, wobei die den Dezimalzahlen $2^{n-1} + 1$ bis $2^{n}-1$ zugeordneten Binärbrüche den den Dezimalzahlen $2^{n-1}-1$ bis 0 zugeordneten Binärbrüchen spiegelbildlich bezüglich $2^{n-1}$ gleich sind.

Ist beispielsweise n = 5, so ist das Fehlersignal fünfstellig und umfaßt den dezimalen Zahlenbereich von 0 bis 31. Die zu jeder dieser ganzen Zahlen gehörenden Binärzahlen werden nun so um vier Stellen hinsichtlich ihrer Wertigkeit verschoben, daß z.B. aus der Binärzahl 01010 (= dezimal 10) durch Verschiebung der Wertigkeit um vier Stellen nach links die Binärzahl 0,1010 (= dezimal 0,625) entsteht.

Da aus fünfstelligen Binärwörtern nur Binärbrüche mit vier Stellen hinter dem Komma erzeugbar sind - die fünfte Stelle ist die 0 als vor dem Komma stehende Stelle -, wird beim Ausführungsbeispiel der Erfindung nach Fig. 2 eine Spiegelung am Wert $2^4$ (= dezimal 16) vorgenommen, so daß der herausgegriffenen Binärbruch 0,1010 auch zur Binärzahl für dezimal 22 gehört.

Zum Umschalten zwischen den beiden Eingängen e1, e2 des Umschalters u1 ist ihm das Steuersignal ss1 zugeführt, das den ersten Eingang e1 zum Ausgang durchschaltet, wenn die Videosignale vs einer Zeile eine Abweichung gegenüber dem Abtastraster aufweisen, die in der ersten Hälfte der Abtastperiodendauer liegt. Dagegen ist der zweite Eingang e2 zum Ausgang durchgeschaltet, wenn die Abweichung in der zweiten Hälfte der Abtastperiodendauer liegt. Das erwähnte Fehlersignal fs ist dabei ein Maß für diese Abweichung innerhalb einer Abtastperiodendauer. Mit dem erwähnten fünfstelligen Fehlersignal fs kann diese Abweichung also in 32 äquidistanten Teilen der Abtastperiodendauer gemessen werden.

Die Fig. 3 zeigt ein bevorzugtes Ausführungsbeispiel für das (a/b)-Dezimationsfilter df für den Fall, daß a = 2 und b = 3 ist. Es besteht aus den Verzögerern v4, v5, v6, den Addierern a5, a6, a7, den Konstantenmultiplizierern km3, km4, km5 und dem Umschalter u2.

Die Verzögerungszeit d4, d5 der signalflußmäßig in Reihe liegenden Verzögerer v4, v5 ist wiederum gleich der Periodendauer der Abtastfrequenz t. Am Ausgang des Verzögerers v4 liegt der Konstantenmultiplizierer km3, der mit einem der Dezimalzahl -2 entsprechenden Digitalwort multipliziert. Sein Ausgang liegt an einem der drei Eingänge des Addierers a5; an jeweils einem der verbleibenden beiden Eingänge liegt der Eingang des Verzögerers v4 bzw. der Ausgang des Verzögerers v5. Der Ausgang des Addierers a5 liegt über den Konstantenmultiplizierer km4, der mit einem der Dezimalzahl $2^{-3} + 2^{-6}$ entsprechenden Digitalwort multipliziert, am einen Eingang des Addierers a6, an dessen anderem Eingang der Ausgang des Verzögerers v4 angeschlossen ist.

Der Eingang dieses Filters , also der Ausgang des Koppeländerungsfilters k1 nach Fig. 2, liegt außer am Eingang des Verzögerers v4 auch am Eingang des Verzögerers v6, dessen Verzögerungszeit d6 ebenfalls gleich der Periodendauer der Abtastfrequenz t ist, und an einem der beiden Eingänge des Addierers a7, dessen anderer Eingang am Ausgang des Verzögerers v6 liegt. Der Ausgang des Addierers a7 liegt über den mit einem der Dezimalzahl $2^{-1}$ entsprechenden Digitalwort multiplizierenden Konstanten- multiplizierer km5 am zweiten Eingang e2 des Umschalters u2. Das Steuersignal ss2 dieses Umschalters ist ein Rechtecksignal mit einem Puls-Pausen-Verhältnis von 1:1, dessen Frequenz gleich einem Drittel der Abtastfrequenz t ist.

Die Fig. 4 zeigt ein bevorzugtes Ausführungsbeispiel des ersten Peaking-Filters p1. Es besteht aus den Verzögerern v7, v8, den Konstantenmultiplizierern km6, km 7, km8, den Addierern a8, a9, dem Multiplizierer m2 und dem Begrenzer bg. Die Verzögerer v7, v8 sind signalflußmäßig in Serie geschaltet, und ihre Verzögerungszeit d7, d8 ist gleich 2/3 der Periodendauer der Abtastfrequenz t. Der Eingang diese Filters liegt am Eingang des Verzögerers v7 und am Eingang des mit einem der Zahl -1 entsprechenden Digitalwort multiplizierenden Konstantenmultiplizierers km6. Der Eingang des mit einem der Dezimalzahl 2 entsprechenden Digitalwort multiplizierenden Konstantenmultiplizierers km7 liegt am Ausgang des Verzögerers v7 und der des wiederum mit einem der Zahl -1 entsprechenden Digitalwort multiplizierenden Konstantenmultiplizierers km8 am Ausgang des Verzögerers v8.

Jeweils einer der drei Eingänge des Addierers a8, ist mit dem jeweiligen Ausgang der Konstantenmultiplizierer km6, km 7, km8 verbunden. Der Ausgang des Addierers a8 liegt über den Multiplizierer m2 am einen der beiden Eingänge des Addierers a9, an dessen anderem der Ausgang des Verzögerers v7 angeschlossen ist und dessen Ausgang über den Stellenzahl-Begrenzer bg zum Ausgang dieses Filters und somit zur Verwendungsschaltung uc führt.

Dem zweiten Eingang des Multiplizierers m2 ist das Korrektursignal ks zugeführt, das aus dem fünfstelligen Fehlersignal fs entsprechend der folgenden Tabelle gebildet ist, wobei des besseren Verständnisses wegen anstelle der entsprechenden Binärzahlen Dezimalzahlen angegeben sind:

| fs | $2^7 \text{ks}$ |
|---|---|
| 1, 31 | 24 |
| 2, 30 | 25 |
| 3, 29 | 27 |
| 4, 28 | 29 |
| 5, 27 | 32 |
| 6, 26 | 34 |
| 7, 25 | 36 |
| 8, 24 | 40 |
| 9, 23 | 43 |
| 10, 22 | 47 |
| 11, 21 | 50 |
| 12, 20 | 51 |
| 13, 19 | 53 |
| 14, 18 | 55 |
| 15, 16, 17 | 58. |

Das Ausgangssignal des Addierers a8 wird somit im Multiplizierer m2 mit Zahlen multipliziert, die immer kleiner als eins sind, nämlich z.B. $34/2^7 = 34/128$.

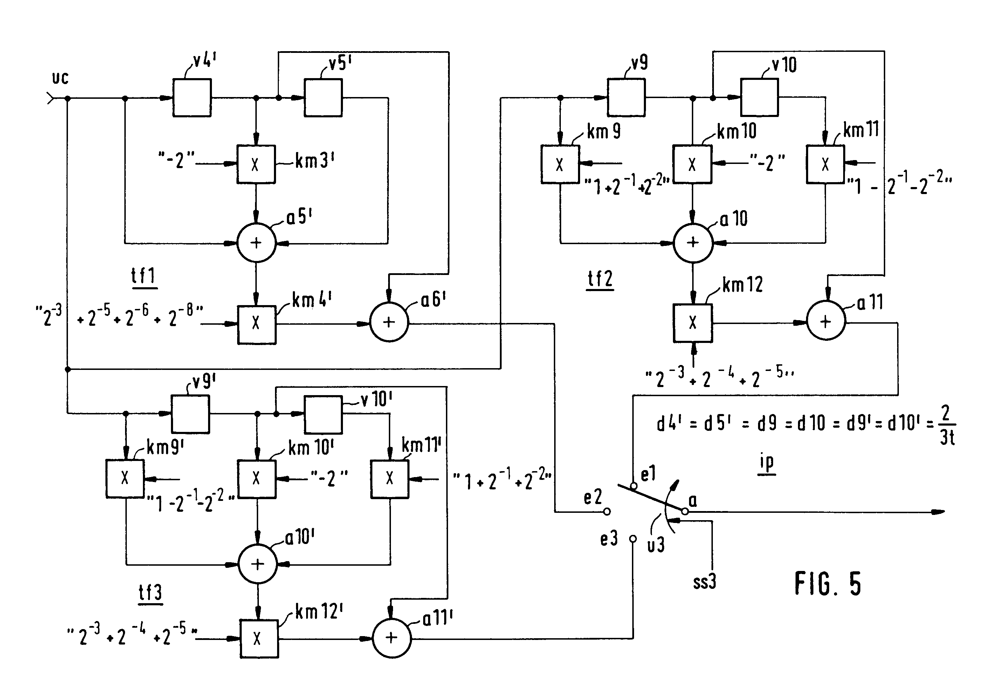

Die Fig. 5 zeigt ein bevorzugtes Ausführungsbeispiel für das (b/a)-Interpolationsfilter ip, wobei wiederum a = 2 und b = 3 ist. Es besteht aus der signalflußmäßigen Parallelschaltung der drei Teilfilter tf1, tf2, tf3 und dem Umschalter u3 mit drei Eingängen e1, e2, e3. Die allgemeine Struktur des Teilfilters tf1 bis auf den fehlenden Umschalter u2, den fehlenden Verzögerer v5, den fehlenden Addierer a7 und den fehlenden Konstantemultiplizierer km5 mit der Struktur des (2/3)-Dezimationsfilters df nach Fig. 3 identisch, so daß die Bezugszeichen der Fig. 3 für das Teilfilter tf1, jeweils ergänzt mit einem Apostroph, übernomen sind. Ein wesentlicher Unterschied gegenüber Fig. 3 besteht allerdings darin, daß der vierte Konstantenmultiplizierer km4′ mit einem der Dezimalzahl $2^{-3} + 2^{-5} + 2^{-6} + 2^{-8}$ entsprechenden Digitalwort multipliziert. Die Verzögerungszeit d4′, d5′ der Verzögerer v4′, v5′ ist gleich 2/3 der Periodendauer der Abtastfrequenz t, wie dies im übrigen auch für die Verzögerungszeiten d9, d10, d9′, d10′ der übrigen Verzögerer v9, v10, v9′, v10′ der Teilfilter tf2, tf3 zutrifft. Die Verknüpfung der einzelnen Teilschaltungen des Teilfilters tf1 ergibt sich somit ohne weiteres aus der Beschreibung der Fig. 3, auf die zur Vermeidung von Widerholungen verwiesen wird.

Die Teilfilter tf2, tf3 sind untereinander wieder strukturidentisch und im übrigen auch bis auf den Begrenzer bg strukturidentisch mit dem ersten Peaking-Filter p1 nach Fig. 4, wobei allerdings der Multiplizierer m2 nach Fig. 4 durch die Konstantenmultiplizierer km12, km12′ ersetzt ist und auch die den Konstantenmultiplizierern km9, km10, km11; km9′, km10′, km11′ zugeführten Digitalwörter anderen Dezimalzahlen entsprechen als in Fig. 4.

So ist den dem Konstantenmultiplizierer km7 entsprechenden Konstantenmultiplizieren km10, km10′ ein der Dezimalzahl -2 entsprechendes Digitalwort zugeführt. Ferner multiplizieren die Konstantenmultiplizierer km9, km11′ mit einem der Dezimalzahl $1 + 2^{-1} + 2^{-2}$ entsprechenden Digitalwort, während die Konstantenmultiplizierer km9′, km11 mit einem der Dezimalzahl $1 - 2^{-1} - 2^{-2}$ entsprechenden Digitalwort multiplizieren. Schließlich multiplizieren die Konstantenmultiplizierer km12, km12′ mit einem der Dezimalzahl $2^{-3} + 2^{-4} + 2^{-5}$ entsprechenden Digitalwort.

Die Zusammenschaltung der einzelnen Glieder der beiden Filter tf2, tf3 ergibt sich aus der obigen Beschreibung der Fig. 4, wobei sich die jeweiligen Entsprechungen aus dem Vergleich der Fig. 4 und 5 ohne weiteres ergeben, also entspricht Konstantenmultiplizierer km6 den Konstantenmultiplizierern km9, km9′ etc.

Der erste Eingang e1 des Umschalters u3 ist mit dem Ausgang des Addierers a11 von Teilfilter tf2, der zweite Eingang e2 mit dem Ausgang des Addierers a6′ von Teilfilter tf1 und der Eingang e3 mit dem Ausgang des Addierers a11′ von Teilfilter tf3 verbunden. Das dem Umschalter u3 zugeführte Steuersignal ss3 hat eine Frequenz gleich der Abtastfrequenz und ein Puls-Pausen-Verhältnis von 1:1. Es steuert den Umschalter so, daß von einer gerade eingenommenen Eingangs-Ausgangsverbindung e1-a; e2-a; e3-a immer auf die übernächste durchgeschaltet wird, also von e1-a auf e3-a auf e2-a auf e1-a.

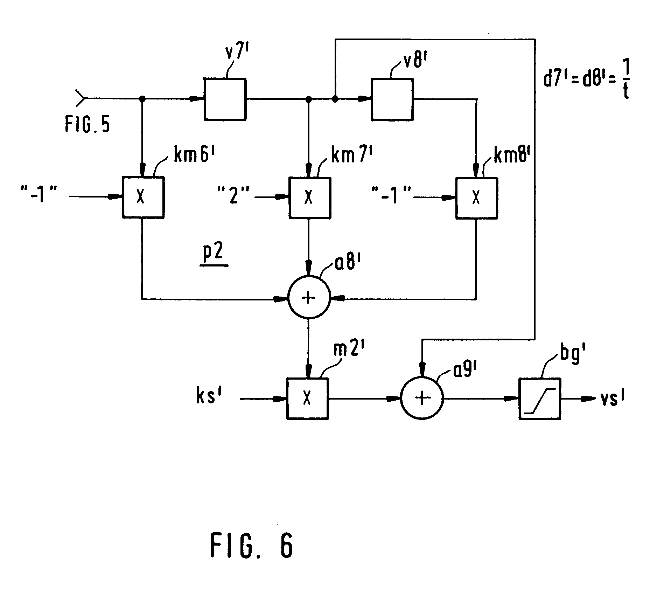

In Fig. 6 ist schließlich ein bevorzugtes Ausführungsbeispiel für das zweite Peaking-Filter p2 gezeigt. Es unterscheidet sich hinsichtlich seiner Struktur vom Peaking-Filter p1 nach Fig. 4 nur unwesentlich, so daß die dortigen Bezugszeichen wiederum jeweils mit einem Apostroph übernommen sind. Der eine Unterschied besteht darin, daß die Verzögerungszeit d7′, d8′ der Verzögerer v7′, v8′ gleich der Periodenauer der Abtastfrequenz t ist. Der zweite Unterschied besteht in der Zuführung eines vom Korrektursignal ks des Multiplizierers m2 nach Fig. 4 abweichenden Korrektursignals ks′ zum Multiplizierer m2′. Dieses Korrektursignal ks′ ist wie in der folgenden Tabelle angegeben definiert:

| fs | $2^7$ks′ |
|---|---|
| 0 | 39 |
| 1, 31 | 41 |
| 2, 30 | 43 |
| 3, 29 | 45 |
| 4, 28 | 47 |
| 5, 27 | 49 |
| 6, 26 | 51 |
| 7, 25 | 54 |
| 8, 24 | 57 |
| 9, 23 | 60 |
| 10, 22 | 64 |
| 11, 21 | 67 |
| 12, 20 | 71 |
| 13, 19 | 74 |
| 14, 18 | 78 |
| 15, 17 | 82 |
| 16, | 86 . |

Zu den Werten 8, 24 des Fehlersignals fs hat das Korrektursignal ks′ also den Dezimalwert $57/2^7$ = 57/128. Die Verknüpfung der einzelnen Teile des zweiten Peaking-Filters p2 nach Fig. 6 ergibt sich im übrigen aus der Beschreibung der Fig. 3.

Bei einer bevorzugten Realisierung der Erfindung ist die Abtastfrequenz gleich dem Vierfachen der Farbhilfsträgerfrequenz. Beim PAL-Standard ergeben sich somit für 2/3 der Abtastfrequenz 11,82 MHz und für die Abtastfrequenz 17,74 MHz. Diese Frequenzen sind in Fig. 1 am Ausgang der jetzigen Teilschaltung eingetragen, wo sie nach einer Änderung erstmals auftreten.

**Patentansprüche**

1. Daten-Compander für digitale Videosignale (vs), deren Abtastfrequenz (t) mit der Farbträgerfrequenz verkoppelt ist und bei dem folgende Teilschaltungen signalflußmäßig in Serie geschaltet sind:
   - ein Koppeländerungsfilter (k1), das die Farbträgerverkopplung der Videosignale (vs) in Signale überführt, deren Taktfrequenz mit der Zeilenfrequenz verkoppelt ist (Fig. 2),

- ein (a/b)-Dezimationsfilter (df), wobei a, b ganze Zahlen sind und a kleiner als b ist (Fig. 3),
- ein erstes Peaking-Filter (p1) (Fig. 4),
- eine Verwendungsschaltung (uc) für die zeilenverkoppelten Signale,
- ein (b/a)-Interpolationsfilter (ip) (Fig. 5),
- ein Koppelumkehrfilter (k2), das die Zeilenverkopplung der Signale in deren Kopplung mit der Farbträgerfrequenz überführt (Fig. 2), und
- ein zweites Peaking-Filter (p2) (Fig. 7), an dessen Ausgang die compandierten Videosignale (vs′) auftreten.

2. Koppeländerungsfilter und Koppelumkehrfilter nach Anspruch 1, jeweils bestehend aus (fig. 2):
- einem ersten, einem zweiten und einem dritten Verzögerer (v1, v2, v3), die signalflußmäßig in Reihe liegen und deren jeweilige Verzögerungszeit (d1, d2, d3) gleich der Periodendauer der Abtastfrequenz (t) ist,
- einem ersten Addierer (a1), dessen erster Eingang am Eingang des ersten Verzögerers (v1) und dessen zweiter Eingang am Ausgang des dritten verzögerers (v3) liegt,
- einem zweiten Addierer (a2) und einem ersten Umschalter (u1), deren jeweils erster Eingang am Eingang und deren jeweils zweiter Eingang am Ausgang des zweiten Verzögerers (v2) angeschlossen ist,
- einem ersten Subtrahierer (s1), dessen Minuend-Eingang mit dem Ausgang des ersten Addierers (a1) und dessen Subtrahend-eingang mit dem Ausgang des zweiten Addierers (a2) verbunden ist,
- einem ersten Konstantenmultiplizierer (km1), dessen Eingang am Ausgang des ersten Subtrahierers (s1) liegt und der mit einem der Dezimalzahl $2^{-3} + 2^{-4}$ entsprechenden Digitalwort multipliziert,
- einem dritten Addierer (a3), dessen erster Eingang mit dem Ausgang des ersten Konstantenmultiplizierers (km1) und dessen zweiter Eingang mit dem Ausgang des zweiten Addierers (a2) verbunden ist,
- einem zweiten Konstantenmultiplizierer (km2), der dem Ausgang des dritten Addierers (a3) nachgeschaltet ist und der mit einem der Dezimalzahl $2^{-1}$ entsprechenden Digitalwort multipliziert,
- einem zweiten Subtrahierer (s2), dessen Minuend-Eingang am Ausgang des zweiten Konstantenmultiplizierers (km2) und dessen Subtrahend-eingang am Ausgang des ersten Umschalters (u1) liegt,
- einem ersten Multiplizierer (m1), dessen erster Eingang mit dem Ausgang des zweiten Subtrahierers (s2) verbunden ist, und
- einem vierten Addierer (a4), dessen erster Eingang am Ausgang des ersten Umschalters (u1) und dessen zweiter Eingang am Ausgang des ersten Multiplizierers (m1) liegt sowie dessen Ausgang der Ausgang dieses Filters ist, wobei
  - der erste Eingang (e1) des ersten Umschalters (u1) von einem Steuersignal (ss1) zu seinem Ausgang durchgeschaltet ist, wenn die Videosignale (vs) einer Zeile eine Abweichung gegenüber dem Abtastraster aufweisen, die in der ersten Hälfte der Abtastperiodendauer liegt, dagegen dessen zweiter Eingang (e2) zu seinem Ausgang durchgeschaltet ist, wenn die Abweichung in der zweiten Hälfte der Abtastperiodendauer liegt, und
  - dem zweiten Eingang des ersten Multiplizierers (m1) ein n-, vorzugsweise fünf-, -stelliges, natürlich-binäres Fehlersignal (fs), das proportional zu derjenigen zeitlichen, in Teilen der Periodendauer der Abtastfrequenz gemessenen Abweichung ist, die das Videosignal einer Zeile gegenüber dem Abtastraster aufweist, derart zugeführt ist, daß durch Stellenverschiebung um n-1 Stellen in Richtung fallender Wertigkeit der Stellen ein Binärbruch mit n-1 Stellen hinter dem Komma entsteht, wobei die den Dezimalzahlen $2^{n-1} + 1$ bis $2^{n}-1$ zugeordneten Binärbrüche den den Dezimalzahlen $2^{n-1}-1$ bis 0 zugeordneten Binärbrüchen spiegelbildlich bezüglich $2^{n-1}$ gleich sind.

3. (a/b)-Dezimationsfilter nach Anspruch 1 und 2, mit a = 2 und b = 3, bestehend aus (Fig. 3):
- einem vierten und einem fünften Verzögerer (v4, v5), die signalflußmäßig in Serie liegen und deren jeweilige Verzögerungszeit (d4, d5) gleich der Periodendauer der Abtastfrequenz (t) ist,
- einem dritten Konstantenmultiplizierer (km3), dessen Eingang am Ausgang des vierten Verzögerers (v4) angeschlossen ist und der mit einem der Dezimalzahl -2 entsprechenden Digitalwort multipliziert,
- einem fünften Addierer (a5), dessen erster Eingang mit dem Eingang des vierten Verzögerers

7

(v4), dessen zweiter Eingang mit dem Ausgang des fünften Verzögerers (v5) und dessen dritter Eingang mit dem Ausgang des dritten Konstantenmultiplizierers (km3) verbunden ist,

- einem vierten Konstantenmultiplizierer (km4), dessen Eingang am Ausgang des fünften Addierers (a5) liegt und der mit einem der Dezimalzahl $2^{-3} + 2^{-6}$ entsprechenden Digitalwort multipliziert,
- einem sechsten Addierer (a6), dessen erster Eingang mit dem Ausgang des vierten Verzögerers (v4) und dessen zweiter Eingang mit dem Ausgang des vierten Konstantenmultiplizierers (km4) verbunden ist,
- einem sechsten Verzögerer (v6), dessen Verzögerungszeit (d6) gleich der Periodendauer der Abtastfrequenz ist und dessen Eingang am Eingang des vierten Verzögerers (v4) liegt,
- einem siebten Addierer (a7), dessen erster Eingang am Eingang des vierten Verzögerers (v4) und dessen zweiter Eingang am Ausgang des sechsten Verzögerers (v6) angeschlossen ist,
- einem fünften Konstantenmultiplizierer (km5), der dem siebten Addierer (a7) nachgeschaltet ist und der mit einem der Dezimalzahl $2^{-1}$ entsprechenden Digitalwort multipliziert, und
- einem zweiten Umschalter (u2), dessen erster Eingang (e1) am Ausgang des sechsten Addierers (a6) und dessen zweiter Eingang (e2) am Ausgang des fünften Konstantenmultiplizierers (km5) liegt sowie dessen Ausgang der Ausgang des Dezimationsfilters (df) ist, wobei
  - das Steuersignal (ss2) des zweiten Umschalters (u2) ein Rechtecksignal mit dem Puls-Pausen-Verhältnis 1:1 ist, dessen Frequenz gleich einem Drittel der Abtastfrequenz ist.

4. Erstes bzw. zweites Peaking-Filter nach den Ansprüchen 1 bis 3, bestehend aus (Fig. 4, Fig. 6):
   - einem siebten und einem achten Verzögerer (v7, v7', v8, v8'), die signalflußmäßig in Serie liegen und deren jeweilige Verzögerungszeit (d7, d8; d7', d8') beim ersten Peaking-Filter (p1) gleich 2/3 der Periodendauer der Abtastfrequenz (t) und beim zweiten Peaking-Filter (p2) gleich der Periodendauer der Abtastfrequenz (t) ist,
   - einem sechsten Konstantenmultiplizierer (km6, km6') dessen Eingang am Eingang des Siebten Verzögerers (v7) liegt,
   - einem siebten Konstantenmultiplizierer (km7, km7'), dessen Eingang am Ausgang des siebten Verzögerers (v7, v7') angeschlossen ist und der mit einem der Dezimalzahl 2 entsprechenden Digitalwort multipliziert,
   - einem achten Konstantenmultiplizierer (km8, km8') dessen Eingang mit dem Ausgang des achten Verzögerers (v8, v8') verbunden ist und der ebenso wie der sechste Konstantenmultiplizierer (km6, km6') mit einem der Zahl -1 entsprechenden Digitalwort multipliziert,
   - einem achten Addierer (a8, a8'), dessen erster Eingang am Ausgang des sechsten, dessen zweiter Eingang am Ausgang des siebten und dessen dritter Eingang am Ausgang des achten Konstantenmultiplizierers liegt,
   - einem zweiten Multiplizierer (m2, m2'), dessen erster Eingang mit dem Ausgang des achten Addierers (a8, a8') verbunden ist,
   - einem neunten Addierer (a9, a9'), dessen erster Eingang am Ausgang des zweiten Multiplizierers (m2, m2') und dessen zweiter Eingang am Ausgang des siebten Verzögerers (v7, v7') liegt, und
   - einem Stellenzahl-Begrenzer (bg, bg'), der zwischen dem Ausgang des neunten Addierers (a9, a9') und dem Ausgang des Peaking-Filters eingefügt ist, wobei
     - dem zweiten Eingang des zweiten Multiplizierers (m2) des ersten Peaking-Filters (p1) ein Korrektursignal (ks) zugeführt ist, das aus dem fünfstelligen Fehlersignal (fs) entsprechend der folgenden Tabelle gebildet ist, in der Dezimalzahlen anstelle der entsprechenden Binärzahlen angegeben sind:

|  fs | $2^7 ks$ |
|---|---|
| 1, 31 | 24 |
| 2, 30 | 25 |
| 3, 29 | 27 |
| 4, 28 | 29 |
| 5, 27 | 32 |
| 6, 26 | 34 |
| 7, 25 | 36 |
| 8, 24 | 40 |
| 9, 23 | 43 |
| 10, 22 | 47 |
| 11, 21 | 50 |
| 12, 20 | 51 |
| 13, 19 | 53 |
| 14, 18 | 55 |
| 15, 16, 17 | 58, und |

- dem zweiten Eingang des zweiten Multiplizierers (m2') des zweiten Peakingfilters (p2) ein zweites Korrektursignal (ks2') zugeführt ist, das entsprechend der folgenden Tabelle gebildet ist, in der Dezimalzahlen anstelle der entsprechenden Binärzahlen angegeben sind:

| f s | $2^7$ ks′ |
|-----|-----------|
| 0 | 39 |
| 1 , 31 | 41 |
| 2 , 30 | 43 |
| 3 , 29 | 45 |
| 4 , 28 | 47 |
| 5 , 27 | 49 |
| 6 , 26 | 51 |
| 7 , 25 | 54 |
| 8 , 24 | 57 |
| 9 , 23 | 60 |
| 10 , 22 | 64 |
| 11 , 21 | 67 |
| 12 , 20 | 71 |
| 13 , 19 | 74 |
| 14 , 18 | 78 |
| 15 , 17 | 82 |
| 16 , | 86 . |

5. (b/a)-Interpolationsfilter nach den Ansprüchen 1 bis 4 mit a = 2 und b = 3, bestehend aus (Fig. 5):

- der signalflußmäßigen Parallelschaltung eines ersten Teilfilters (tf1), das bis auf den fehlenden zweiten Umschalter (u2), fünften Verzögerer (v5), siebten Addierer (a7) und fünften Konstantenmultiplizierer (km5) mit dem (2/3)-Dezimationsfilter strukturidentisch ist, wobei allerdings der vierte Konstantenmultiplizierer (km4′) mit einem der Dezimalzahl $2^{-3}+2^{-5}+2^{-6}+2^{-8}$ entsprechenden Digitalwort multipliziert und die Verzögerungszeit (d4′, d5′) des vierten und des fünften Verzögerers (v4′, v5′) gleich 2/3 der Periodendauer der Abtastfrequnez (t) ist, und eines zweiten und eines dritten Teilfilters (tf2, tf3) mit untereinander indentischer Struktur, bei der vorgesehen sind:
  - ein neunter und ein zehnter Verzögerer (v9, v10, v9′, v10′), deren Verzögerungszeit (d9, d10, d9′, d10′) gleich 2/3 der Periodendauer der Abtastfrequenz ist und die signalflußmäßig in Serie liegen,
  - ein neunter Konstantenmultiplizierer (km9, km9′), dessen erster Eingang am Eingang des neunten Verzögerers liegt,
  - ein zehnter Konstantenmultiplizierer (km10, km10′), dessen Eingang mit dem Ausgang des neunten Verzögerers (v9, v9′) verbunden ist und der mit einem der Dezimalzahl -2 entsprechenden Digitalwort multipliziert,
  - ein elfter Konstantenmultiplizierer (km11, km11′), dessen Eingang am Ausgang des zehnten Verzögerers (v10, v10′) angeschlossen ist,
  - ein zehnter Addierer (a10, a10′), dessen erster Eingang am Ausgang des neunten, dessen zweiter Eingang am Ausgang des zehnten und dessen dritter Eingang am Ausgang des elften Konstantenmultiplizierers liegt,
  - ein zwölfter Konstantenmultiplizierer (km12, km12′), dessen Eingang am Ausgang des zehnten Addierers (a10, a10′) angeschlossen ist und der mit einem der Dezimalzahl $2^{-3}+2^{-4}+2^{-5}$ entsprechenden Digitalwort multipliziert, und

- ein elfter Addierer (a11, a11'), dessen erster Eingang am Ausgang des zwölften Konstanten-multiplizierers (km12, km12') und dessen zweiter Eingang am Ausgang des neunten Verzöge-rers (v9, v9') liegt sowie dessen Ausgang der des Teilfilters ist, wobei,
- der neunte Konstantenmultiplizierers (km9) des zweiten Teilfilters (tf2) und der elfte Konstantenmultiplizierer (km11') des dritten Teilfilters (tf3) mit einem der Dezimalzahl $1+2^{-1}+2^{-2}$ entsprechenden Digitalwort multiplizieren und
- der neunte Konstantenmultiplizierer (km9') des dritten Teilfilers (tf3) und der elfte Konstantenmultiplizierers (km11) des zweiten Teilfilters (tf2) mit einem der Dezimalzahl $1\text{-}2^{-1}\text{-}2^{-2}$ entspre-chenden Digitalwort multiplizieren, sowie
- bestehend aus einem dritten Umschalter (u3) mit drei Eingängen, deren ersten (e1) am Ausgang des zweiten Teilfilters (tf2), deren zweiter (e2) am Ausgang des ersten Teilfilters (tf1) und deren dritter (e3) am Ausgang des dritten Teilfilters (tf3) liegt und dessen Steuereingang ein Steuersignal (ss3) zugeführt ist, dessen Frequenz gleich der Abtastfrequenz ist, das ein Puls-Pausen-Verhältnis von 1:1 hat und das von einer gerade eingenommenen Eingangs-Ausgangsverbindung (e1-a; e2-a; e3-a) immer auf die übernächste (e1-a - e3-a - e2-a - e1-a) durchschaltet.

6. Daten-Compander nach einem der Ansprüche 1 bis 5, bei dem die Abtastfrequenz gleich der vierfachen Farbträgerfrequenz eines Fernsehstandards ist.

**Claims**

1. Data compander for digital video signals (vs) whose sampling frequency (t) is locked to the chrominance-subcarrier frequency and in which data compander the following subcircuits are connected in series:
   - a lock-mode-changing filter (k1) which changes the lock of the video signals (vs) with the chrominance subcarrier into signals having their clock frequency locked to the line frequency (Fig. 2),
   - an (a/b)-decimation filter (df), where a, b are integers and $\underline{a}$ is less than b (Fig. 3),
   - a first peaking filter (p1) (Fig. 4),
   - a utilization circuit (uc) for the line-locked signals,
   - a (b/a)-interpolation filter (ip) (Fig. 5),
   - a lock-mode-reversing filter (k2) which changes the line lock of the signals into a lock with the chrominance-subcarrier frequency (Fig. 2), and
   - a second peaking filter (p2) (Fig. 7) whose output provides the companded video signals (vs').

2. A lock-mode-changing filter and a lock-mode-reversing filter as claimed in claim 1, each consisting of (Fig. 2):
   - first, second, and third delay elements (v1, v2, v3) connected in cascade and each providing a delay (d1, d2, d3) equal to the sampling period (1/t),
   - a first adder (a1) having its first and second inputs connected to the input of the first delay element (v1) and to the output of the third delay element (v3), respectively,
   - a second adder (a2) and a first changeover switch (u1) which have their first inputs connected to the input of the second delay element (v2), and their second inputs to the output of the second delay element (v2),
   - a first subtracter (s1) having its minuend and subtrahend inputs connected to the output of the first adder (a1) and to the output of the second adder (a2), respectively,
   - a first constant multiplier (km1) which has its input connected to the output of the first subtracter (s1) and multiplies by a digital word equivalent to the decimal number $2^{-3} + 2^{-4}$,
   - a third adder (a3) having its first and second inputs connected to the output of the first constant multiplier (km1) and to the output of the second adder (a2), respectively,
   - a second constant multiplier (km2) which follows the output of the third adder (a3) and multiplies by a digital word equivalent to decimal number $2^{-1}$,
   - a second subtracter (s2) having its minuend and subtrahend inputs connected to the output of the second constant multiplier (km2) and to the output of the first changeover switch (u1), respectively,
   - a first multiplier (m1) having its first input connected to the output of the second subtracter (s2), and
   - a fourth adder (a4) which has its first and second inputs connected to the outputs of the first changeover switch (u1) and the first multiplier (m1), respectively, and whose output is the output of this filter, with

- the first input (e1) of the first changeover switch (u1) connected by a control signal (ss1) to the output of the first changeover switch (u1) if the video signals (vs) of a line exhibit a deviation from the sampling pattern which lies in the first half of the sampling period, whereas the second input (e2) of the first changeover switch (u1) is connected to the output of this switch if the deviation lies in the second half of the sampling period, and

- the second input of the first multiplier (m1) being fed an n-, preferably five-, digit, pure binary error signal (fs) which is proportional to the time deviation, measured in parts of the sampling period, of the video signal of a line from the sampling pattern, such that by shifting n - 1 places to the right, a binary fraction with n - 1 digits behind the point is obtained, with the binary fraction assigned to decimal numbers $2^{n-1} + 1$ to $2^n - 1$ being mirror-symmetrically equal to the binary fractions assigned to decimal numbers $2^{n-1} - 1$ to 0 with respect to $2^{n-1}$.

3. An (a/b)-decimation filter as claimed in claims 1 and 2, where a = 2 and b = 3, consisting of (Fig. 3):
   - a fourth delay element (v4) and a fifth delay element (v5) connected in series and each providing a delay (d4, d5) equal to the sampling period (1/t),
   - a third constant multiplier (km3) which has its input connected to the output of the fourth delay element (v4) and multiplies by a digital word equivalent to decimal number -2,
   - a fifth adder (a5) which has its first input connected to the input of the fourth delay element (v4), its second input to the output of the fifth delay element (v5), and its third input to the output of the third constant multiplier (km3),
   - a fourth constant multiplier (km4) which has its input connected to the output of the fifth adder (a5) and multiplies by a digital word equivalent to the decimal number $2^{-3} + 2^{-6}$,
   - a sixth adder (a6) having its first and second inputs connected to the outputs of the fourth delay element (v4) and the fourth constant multiplier (km4), respectively,
   - a sixth delay element (v6) which provides a delay (d6) equal to the sampling period and has its input connected to the input of the fourth delay element (v4),
   - a seventh adder (a7) having its first and second inputs connected to the input of the fourth delay element (v4) and to the output of the sixth delay element (v6), respectively,
   - a fifth constant multiplier (km5) which follows the seventh adder (a7) and multiplies by a digital word equivalent to decimal number $2^{-1}$, and
   - a second changeover switch (u2) which has its first input (e1) and second input (e2) connected to the outputs of the sixth adder (a6) and the fifth constant multiplier (km5), respectively, and whose output is the output of the decimation filter (df), with
     - the control signal (ss2) for the second changeover switch (u2) being a square-wave signal (1 : 1 mark/space ratio) whose frequency is equal to one third of the sampling frequency.

4. A first peaking filter and a second peaking filter as claimed in claims 1 to 3, consisting of (Fig. 4, Fig. 6):
   - a seventh delay element (v7, v7') and the eighth delay element (v8, v8') connected in series and each providing a delay (d7, d8; d7', d8') equal to 2/3 of the sampling period (2/(3t)) in the case of the first peaking filter (p1) and equal to the sampling period (1/t) in the case of the second peaking filter (p2),
   - a sixth constant multiplied (km6, km6') having its input connected to the input of the seventh delay element (v7),
   - a seventh constant multiplier (km7, km7') which has its input connected to the output of the seventh delay element (v7, v7') and multiplies by a digital word equivalent to decimal number 2,
   - an eighth constant multiplier (km8, km8') which has its input connected to the output of the eighth delay element (v8, v8') and, like the sixth constant multiplier (km6, km6'), multiplies by a digital word equivalent to the number -1,
   - an eighth adder (a8, a8') which has its first input connected to the output of the sixth constant multiplier, its second input to the output of the seventh constant multiplier, and its third input to the output of the eighth constant multiplier,
   - a second multiplier (m2, m2') having its first input connected to the output of the eighth adder (a8, a8'),
   - a ninth adder (a9, a9') having its first and second inputs connected to the outputs of the second multiplier (m2, m2') and the seventh delay element (v7, v7'), and

- a number-of-digits limiter (bg, bg') interposed between the output of the ninth adder (a9, a9') and the output of the peaking filter, with
  - the second input of the second multiplier (m2) of the first peaking filter (p1) being fed with a correction signal (ks) formed from the five-digit error signal (fs) according to the following table, in which decimal numbers are given instead of the corresponding binary numbers:

| fs | $2^7 ks$ |
|----|----------|
| 1, 31 | 24 |
| 2, 30 | 25 |
| 3, 29 | 27 |
| 4, 28 | 29 |
| 5, 27 | 32 |
| 6, 26 | 34 |
| 7, 25 | 36 |
| 8, 24 | 40 |
| 9, 23 | 43 |
| 10, 22 | 47 |
| 11, 21 | 50 |
| 12, 20 | 51 |
| 13, 19 | 53 |
| 14, 18 | 55 |
| 15, 16, 17 | 58, and |

- the second input of the second multiplier (m2') of the second peaking filter (p2) being fed with a second correction signal (ks2') formed according to the following table, in which decimal numbers are given instead of the corresponding binary numbers:

| fs | $2^7 ks'$ |
|----|-----------|
| 0 | 39 |
| 1, 31 | 41 |
| 2, 30 | 43 |
| 3, 29 | 45 |
| 4, 28 | 47 |
| 5, 27 | 49 |
| 6, 26 | 51 |
| 7, 25 | 54 |
| 8, 24 | 57 |
| 9, 23 | 60 |
| 10, 22 | 64 |
| 11, 21 | 67 |
| 12, 20 | 71 |
| 13, 19 | 74 |
| 14, 18 | 78 |
| 15, 17 | 82 |
| 16, | 86 . |

5. A (b/a)-interpolation filter as claimed in claims 1 to 4, where a = 2 and b = 3, consisting of (Fig. 5):
   - the parallel combination of a first filter subnetwork (tf1), a second filter subnetwork (tf2), and a third filter subnetwork (tf3), the first filter subnetwork (tf1) being identical in structure with the (2/3)-decimation filter except that it does not include the second changeover switch (u2), the fifth delay element (v5), the seventh adder (a7), and the fifth constant multiplier (km5), with the fourth constant multiplier (km4') multplying by a digital word equivalent to the decimal number $2^{-3} + 2^{-5} + 2^{-6} + 2^{-8}$, and the delay (d4', d5') of each of the fourth and fifth delay elements (v4', v5') being equal to 2/3 of the sampling period (2/(3t)), and the second and third filter subnetworks (tf2, tf3) being identical in structure and comprising:
- a ninth delay element (v9, v9') and a tenth delay element (v10, v10') which each provide a delay (d9, d9'; d10, d10') equal to 2/3 of the sampling period (2/(3t)) and are connected in series,
- a ninth constant multiplier (km9, km9') having its first input connected to the input of the ninth delay element (v9, v9'),
- a tenth constant multiplier (km10, km10') which has its input connected to the output of the ninth delay element (v9, v9') and multiplies by a digital word equivalent to decimal number -2,
- an eleventh constant multiplier (km11, km11') having its input connected to the output of the tenth delay element (v10, v10'),
- a tenth adder (a10, a10') which has its first input connected to the output of the ninth constant multiplier, its second input to the output of the tenth constant multiplier, and its third input to the output of the eleventh constant multiplier,
- a twelfth constant multiplier (km12, km12') which has its input connected to the output of the tenth adder (a10, a10') and multiplies by a digital word equivalent to decimal number $2^{-3} + 2^{-4} + 2^{-5}$, and
- an eleventh adder (a11, a11') which has its first and second inputs connected to the output of the twelfth constant multiplier (km12, km12') and to the output of the ninth delay element (v9, v9'), respectively, and whose output is that of the filter subnetwork, with
  - the ninth constant multiplier (km9) of the second filter subnetwork (tf2) and the eleventh constant multiplier (km11') of the third filter subnetwork (tf3) multiplying by a digital word equivalent to decimal number $1 + 2^{-1} + 2^{-2}$, and
  - the ninth constant multiplier (km9') of the third filter subnetwork (tf3) and the eleventh constant multiplier (km11) of the second filter subnetwork (tf2) multiplying by a digital word equivalent to decimal number $1 - 2^{-1} - 2^{-2}$, and
- further consisting of a third changeover switch (u3) having three inputs the first of which (e1) is connected to the output of the second filter subnetwork (tf2), the second (e2) to the output of the first filter subnetwork (tf1), and the third (e3) to the output of the third filter subnetwork (tf3), and a control input having a control signal (ss3) applied thereto whose frequency is equal to the sampling frequency and which has a 1 : 1 mark/space ratio and changes from any input-output connection made (e1-a; e2-a; e3-a) to the next input-output connection but one (e1-a - e3-a - e2-a - e1-a).

6. A data compander as claimed in any one of claims 1 to 5 wherein the sampling frequency is equal to four times the chrominance-subcarrier frequency of a television standard.

**Revendications**

1. Compresseur-extenseur de données pour des signaux vidéo numériques (vs), dont la fréquence d'échantillonnage (t) est couplée à la fréquence de la porteuse couleur et dans lequel les éléments de circuit suivants sont branchés en série dans le sens de la transmission des signaux :
- un filtre de modification de couplage (k1), qui convertit le couplage des signaux vidéo (vs) à la porteuse couleur en des signaux dont la fréquence de cadence est couplée à la fréquence de lignes (figure 2),
- un filtre à décimation (a/b) (df), a, b étant des nombres entiers et a étant inférieur à b (figure 3),
- un premier filtre de correction (p1) (figure 4),
- un circuit d'utilisation (uc) pour les signaux couplés aux lignes,
- un filtre d'interpolation (b/a) (ip) (figure 5),
- un filtre d'inversion de couplage (k2), qui convertit le couplage de lignes des signaux en leur couplage à la fréquence de la porreuse couleur (figure 2), et
- un second filtre de correction (p2) (figure 7) à la sortie duquel apparaissent les signaux vidéo (vs') comprimés-expansés.

2. Filtre de modification de couplage et filtre d'inversion de couplage selon la revendication 1, constitués respectivement par (figure 2) :
- de premier, second et troisième circuits de retardement (v1, v2, v3), qui sont branchés en série dans le sens de transmission des signaux et qui produisent des retards respectifs (d1, d2, d3) égaux à la durée de la période de la fréquence d'échantillonnage (t),

- un premier additionneur (a1), dont la première entrée est raccordée à l'entrée du premier circuit de retardement (v1) et dont la seconde entrée est raccordée à la sortie du troisième circuit de retardement (v3),
- un second additionneur (a2) et un premier commutateur (u1), dont la première entrée respective est raccordée à l'entrée du second circuit de retardement (v2) et dont la seconde entrée respective est raccordée à la sortie de ce circuit de retardement,
- un premier soustracteur (s1), dont l'entrée du diminuende est raccordée à la sortie du premier additionneur (a1) et dont l'entrée du nombre à soustraire est raccordée à la sortie du second additionneur (a2),
- un premier multiplicateur (km1), qui réalise une multiplication par une constante et dont l'entrée est raccordée à la sortie du premier soustracteur (s1) et qui réalise une multiplication par un mot numérique correspondant au nombre décimal $2^{-3} + 2^{-4}$,
- un troisième additionneur (a3) dont la première entrée est raccordée à la sortie du premier multiplicateur (km1) qui réalise une multiplication par une constante, et dont la seconde entrée est raccordée à la sortie du second additionneur (a2),
- un second multiplicateur (km2), qui réalise une multiplication par constante et qui est branché en aval de la sortie du troisième additionneur (a3) et réalise une multiplication par un mot numérique qui correspond au nombre décimal $2^{-1}$,
- un second soustracteur (s2), dont l'entrée du diminuende est raccordée à la sortie du second multiplicateur (km2) qui réalise une multiplication par une constante, et dont l'entrée du nombre à soustraire est raccordée à la sortie du premier commutateur (u1),
- un premier multiplicateur (m1), dont la première entrée est raccordée à la sortie du second soustracteur (s2), et
- un quatrième additionneur (a4), dont la première entrée est raccordée à la sortie du premier commutateur (u1) et dont la seconde entrée est raccordée à la sortie du premier multiplicateur (m1), et dans lequel
  - la première entrée (e1) du premier commutateur (u1) est interconnectée, par un signal de commande (ss1), à sa sortie, lorsque les signaux vidéo (vs) d'une ligne présente, par rapport à la trame d'échantillonnage un écart qui se situe dans la première moitié de la durée de la période d'échantillonnage, tandis que la seconde entrée (e2) de ce commutateur est interconnectée à sa sortie lorsque l'écart se situe dans la seconde moitié de la durée de la période d'échantillonnage, et
  - un signal d'erreur binaire naturel (fs) à n chiffres, de préférence à 5 chiffres, qui est proportionnel à l'écart dans le temps, qui est mesuré sous la forme de parties de la durée de la période de la fréquence d'échantillonnage et qui contient le signal vidéo d'une ligne par rapport à la trame d'échantillonnage, est envoyé à la seconde entrée du premier multiplicateur (m1) de sorte que sous l'effet du décalage portant sur (m-1) chiffres dans la direction dans laquelle la valeur des chiffres diminue, on obtient une fraction binaire comportant n-1 chiffres derrière la virgule, les fractions binaires associées aux nombres décimaux $2^{n-1} + 1$ à $2^n$-1, étant égales aux fractions binaires associées aux chiffres décimaux $2^{n-1}$-1 jusqu'à 0, d'une manière spéculaire par rapport à $2^{n-1}$.

3. Filtre à décimation (a/b) selon les revendications 1 et 2, dans lequel on a $a = 2$ et $b = 3$, constitué par (figure 3) :
- des quatrième et cinquième circuits de retardement (v4, v5), qui sont branchés en série dans le sens de transmission des signaux et produisent des retards respectifs (d4, d5) égaux à la durée de la période d'échantillonnage (t),
- un troisième multiplicateur (km3), qui réalise une multiplication par une constante et dont l'entrée est raccordée à la sortie du quatrième circuit de retardement (v4) et qui réalise une multiplication avec un mot numérique correspondant au nombre décimal -2,
- un cinquième additionneur (a5), dont la première entrée est raccordée à l'entrée du quatrième circuit de retardement (v4), dont la seconde entrée est raccordée à la sortie du cinquième circuit de retardement (v5) et dont la troisième entrée est raccordée à la sortie du troisième multiplicateur (km3) réalisant une multiplication par une constante,
- un quatrième multiplicateur (km4), qui réalise une multiplication par une constante et dont l'entrée est raccordée à la sortie du cinquième additionneur (a5) et qui réalise une multiplication par un mot numérique correspondant au nombre décimal $2^{-3} + 2^{-6}$,
- un sixième additionneur (a6), dont la première entrée est raccordée à la sortie du quatrième circuit de retardement (v4) et dont la seconde entrée est raccordée à la sortie du quatrième multiplicateur (km4) réalisant une multiplication par une constante,

- un sixième circuit de retardement (v6), qui produit un retard (d6) égal à la durée de la période de la fréquence d'échantillonnage et dont l'entrée est raccordée à l'entrée du quatrième circuit de retardement (v4),
- un septième additionneur (a7), dont la première entrée est raccordée à l'entrée du quatrième circuit de retardement (v4) et dont la seconde entrée est raccordée à la sortie du sixième circuit de retardement (v6),
- un cinquième multiplicateur (km5) réalisant une multiplication par une constante et qui est branché en aval du sixième additionneur (a7) et réalise la multiplication par un mot numérique correspondant au nombre décimal $2^{-1}$, et
- un second commutateur (u2), dont la première entrée (e1) est raccordée à la sortie du sixième additionneur (a6) et dont la seconde entrée (e2) est raccordée à la sortie du cinquième multiplicateur (km5) réalisant une multiplication par une constante, et dont la sortie constitue la sortie du filtre à décimation (df), et dans lequel
  - le signal de commande (ss2) du second commutateur (u2) est un signal rectangulaire possédant un taux d'impulsions 1:1 et dont la fréquence est égale au tiers de la fréquence d'échantillonnage.

4. Premier ou second filtre de correction selon les revendications 1 à 3, constitué par (figure 4, figure 6) :
   - des septième et huitième circuits de retardement (v7, v7', v8, v8'), qui sont branchés en série dans le sens de transmission des signaux et produisent des retards respectifs (d7, d8; d7', d8') égaux aux 2/3 de la durée de la période de la fréquence d'échantillonnage (t) dans le cas du premier filtre de correction (p1) et à la durée de la période de la fréquence d'échantillonnage (t) dans le cas du second filtre de correction (p2),
   - un sixième multiplicateur (km6, km6'), qui réalise une multiplication par une constante et dont l'entrée est raccordée à l'entrée du septième circuit de retardement (v7),
   - un septième multiplicateur (km7, km7'), qui réalise une multiplication par une constante et dont l'entrée est raccordée à la sortie du septième circuit de retardement (v7, v7') et exécute une multiplication par un mot numérique correspondant au chiffre décimal deux,
   - un huitième multiplicateur (km8, km8'), qui réalise une multiplication par une constante et dont l'entrée est raccordée à la sortie du huitième circuit de retardement (v8, v8') et qui, comme le sixième multiplicateur (km6, km6') réalisant une multiplication par une constante, exécute une multiplication par un mot numérique correspondant au chiffre -1,
   - un huitième additionneur (a8, a8'), dont la première entrée est raccordée à la sortie du sixième multiplicateur réalisant une multiplication par une constante, dont la seconde entrée est raccordée à la sortie du septième multiplicateur réalisant une multiplication par une constante et dont la troisième entrée est raccordée à la sortie du huitième multiplicateur réalisant une multiplication par une constante,
   - un second multiplicateur (m2,m2'), dont la première entrée est raccordée à la sortie du huitième additionneur (a8, a8'),
   - un neuvième additionneur (a9, a9'), dont la première entrée est raccordée à la sortie du second multiplicateur (m2, m2') et dont la seconde entrée est raccordée à la sortie du septième circuit de retardement (v7, v7'), et
   - un limiteur (bg, bg') du nombre de chiffres, qui est inséré entre la sortie du neuvième additionneur (a9, a9') et la sortie du filtre de correction, et dans lequel
     - à la seconde entrée du second multiplicateur (m2) du premier filtre de correction (p1) est envoyé un signal de correction (ks), qui est formé par le signal d'erreur (fs) à cinq chiffres, conformément au tableau suivant, dans lequel des chiffres décimaux sont indiqués à la place des chiffres binaires correspondants :

EP 0 281 642 B1

| fs | $2^7$ ks |
|---|---|
| 1, 31 | 24 |
| 2, 30 | 25 |
| 3, 29 | 27 |
| 4, 28 | 29 |
| 5, 27 | 32 |
| 6, 26 | 34 |
| 7, 25 | 36 |
| 8, 24 | 40 |
| 9, 23 | 43 |
| 10, 22 | 47 |
| 11, 21 | 50 |
| 12, 20 | 51 |
| 13, 19 | 53 |
| 14, 18 | 55 |
| 15, 16, 17 | 58, et |

- à la seconde entrée du second multiplicateur (m2') du second filtre de correction (p2) est envoyé un second signal de correction (ks2'), qui est formé conformément au tableau suivant et dans lequel des chiffres décimaux ont été indiqués à la place des nombres binaires correspondants :

| fs | $2^7$ ks' |
|---|---|
| 0 | 39 |
| 1, 31 | 41 |
| 2, 30 | 43 |
| 3, 29 | 45 |
| 4, 28 | 47 |
| 5, 27 | 49 |
| 6, 26 | 51 |
| 7, 25 | 54 |
| 8, 24 | 57 |
| 9, 23 | 60 |
| 10, 22 | 64 |
| 11, 21 | 67 |
| 12, 20 | 71 |
| 13, 19 | 74 |
| 14, 18 | 78 |
| 15, 17 | 82 |
| 16, | 86 . |

5. Filtre d'interpolation (b/a) selon les revendications 1 à 4, avec a = 2 et b = 3, constitué par (figure 5) :
   - le branchement en parallèle, dans le sens de transmission des signaux, d'un premier filtre partiel (tf1), qui possède la même structure que le filtre à décimation (2/3), en dehors du fait que le second commutateur (u2), le cinquième circuit de retardement (v5), le septième additionneur (a7) et le cinquième multiplicateur (km5) et réalisant une multiplication par une constante sont supprimés, et dans lequel assurément le quatrième multiplicateur (km4') qui réalise une multiplication par une constante réalise une multiplication par un mot numérique correspondant au nombre décimal $2^{-3} + 2^{-5} + 2^{-6} + 2^{-8}$ et le retard (d4', d5') produit par les quatrième et cinquième circuits de retardement (v4', v5') est égal aux 2/3 de la durée de la période de la fréquence d'échantillonnage (t), et des second et troisième filtres partiels (tf2, tf3) possèdent des structures identiques, et dans lequel il est prévu :
   - des neuvième et dixième circuits de retardement (v9, v10, v9', v10'), qui produisent des retards (d9, d10, d9', d10') égaux aux 2/3 de la durée de la période de la fréquence d'échantillonnage et qui sont branchés en série dans le sens de transmission des signaux,

- un neuvième multiplicateur (kmg, km9') réalisant une multiplication par une constante et dont la première entrée est raccordée à une entrée du neuvième circuit de retardement,
- un dixième multiplicateur (km10, km10'), qui réalise une multiplication par une constante et dont l'entrée est raccordée à la sortie du neuvième circuit de retardement (v9, v9') et qui réalise une multiplication par un mot numérique correspondant au chiffre décimal -2,
- un onzième multiplicateur (km11, km11') qui réalise une multiplication par une constante et dont l'entrée est raccordée à la sortie du dixième circuit de retardement (v10, v10'),
- un dixième additionneur (a10, a10'), dont la première entrée est raccordée à la sortie du neuvième multiplicateur réalisant une multiplication par une constante, dont la seconde entrée est raccordée à la sortie du dixième multiplicateur réalisant une multiplication par une constante et dont la troisième entrée est raccordée à la sortie du onzième multiplicateur réalisant une multiplication par une constante,
- un douzième multiplicateur (km12, km12'), qui réalise une multiplication par une constante et dont l'entrée est raccordée à la sortie du dixième additionneur (a10, a10') et qui réalise une multiplication par un mot numérique correspondant au chiffre décimal $2^{-3} + 2^{-4} + 2^{-5}$, et
- un onzième additionneur (a11, a11'), dont la première entrée est raccordée à la sortie du douzième multiplicateur (km12, km12') qui réalise une multiplication par une constante, et dont la seconde entrée est raccordée à la sortie du neuvième circuit de retardement (v9, v9') et dont la sortie est raccordée à celle du filtre partiel, et dans lequel
- le neuvième multiplicateur (km9), qui réalise une multiplication par une constante, du second filtre partiel (tf2) et le onzième multiplicateur (km11'), qui réalise une multiplication par une constante, du troisième filtre partiel (tf3) réalisent des multiplications avec un mot numérique correspondant au nombre décimal $1 + 2^{-1} + 2^{-2}$, et
- le neuvième multiplicateur (km9'), qui réalise une multiplication par une constante, du troisième filtre partiel (tf3) et le onzième multiplicateur (km11), qui réalise une multiplication par une constante, du second filtre partiel (tf2) réalisent une multiplication avec un mot numérique correspondant au nombre décimal $1 - 2^{-1} - 2^{-2}$, et

- constitué par un troisième commutateur (u3) comportant trois entrées, dont la première (e1) est raccordée à la sortie du second filtre partiel (tf2), dont la seconde (e2) est raccordée à la sortie du premier filtre partiel (tf1) et dont la troisième (e3) est raccordée à la sortie du troisième filtre partiel (tf3) et dont l'entrée de commande reçoit un signal de commande (ss3), dont la fréquence est égale à la fréquence d'échantillonnage et qui possède un taux d'impulsions égal à 1:1 et réalise toujours l'interconnexion depuis une liaison entrée-sortie (e1-a; e2-a; e3-a) précisément occupée, à la liaison immédiatement suivante (e1-a; e3-a; e2-a; e1-a).

6. Compresseur-extenseur de données selon l'une des revendications 1 à 5, dans lequel la fréquence d'échantillonnage est égale au quadruple de la fréquence de la porteuse couleur d'une norme de télévision.

FIG. 1

FIG. 2

FIG. 3

FIG. 4

FIG. 5

EP 0 281 642 B1

FIG. 6